# EUROPEAN PATENT APPLICATION

(11) **EP 4 835 798 A1**
(43) Date of publication of application: **04.11.2026**
(21) Application number: 25755063.2
(22) Date of filing: 14.01.2025
(51) Int. Cl.: G06Q 50/10, G06K 19/06, G06F 16/955, G06F 16/906, H04W 4/021, H04W 12/06, H04W 12/63

(54) **DIGITAL GALLERY SYSTEM**

(30) Priority: 14.02.2024 KR 20240020837
(71) Applicant: Altsoft, Inc., Seoul 06097 (KR)
(72) Inventor: KIM, Chan Hong, Seoul 06097 (KR)
(74) Representative: M. Zardi & Co S.A.
(86) International application number: PCT/KR2025/000764
(87) International publication number: WO 2025/173941

(57) **Abstract**

According to a digital gallery system proposed herein, in a digital gallery configured with a plurality of local devices, a gallery management server may perform control such that content in a content group selected by a user is output to a particular local device in response to a request from a user terminal, so that the user may actively select the content group to directly experience and the local device for experience, thereby increasing user autonomy and satisfaction.

## Description

### Technical Field

The present disclosure relates to a digital gallery system. More particularly, the present disclosure relates to a digital gallery system configured with a plurality of local devices.

### Background Art

The description in this section merely provides background information on one embodiment of the present disclosure and does not constitute the related art.

Digital signage refers to an outdoor advertisement using a digital information display (DID), specifically a billboard of which advertisement content can be controlled by a control center through a communication network. The digital signage can be commonly seen in places with heavy foot traffic, such as subway stations, bus stops, apartment elevators, and banks.

With the significant development of display technology, a digital gallery or a digital museum providing various images and effects through multiple digital signages has recently been introduced. Such a digital gallery or a digital museum can provide various experiences that cannot be experienced through conventional exhibitions of paintings, photographs, or real historical remains, and thus has gained great popularity among young people. However, in such a digital gallery or a digital museum, a user has no choice but to experience an exhibition exactly as planned by an exhibition planner, and interaction with the user is absent or performed only in a very limited manner.

Therefore, in an environment, such as a digital gallery or a digital museum, where multiple digital signages exist, there is a need to develop a technology capable of allowing a user to actively select and control content to be experienced by the user.

In the meantime, as a related art of the present disclosure, disclosed is Korean Patent No. 10-1364255 (Titled: BIDIRECTIONAL DIGITAL GALLERY EQUIPMENT FOR EXHIBITION CENTER, registration date: 10 February 2014).

The above-described background technology is technical information that has been possessed by the present inventor in order to derive the present disclosure or which has been acquired in the process of deriving the present disclosure, and can not necessarily be regarded as well-known technology which has been known to the public prior to the filing of the present disclosure.

### Disclosure

### Technical Problem

The present disclosure has been made keeping in mind the above problems occurring in the previously proposed methods, and the present disclosure is directed to providing a digital gallery system, wherein in a digital gallery configured with a plurality of local devices, a gallery management server may perform control such that content in a content group selected by a user is output to a particular local device in response to a request from a user terminal, so that the user may actively select the content group to directly experience and the local device for experience, thereby increasing user autonomy and satisfaction.

However, the objectives of the present disclosure are not limited thereto, and there may be other objectives. Even if not explicitly mentioned, the objectives or effects that can be understood from the solutions or embodiments are also objectives of the present disclosure.

### Technical Solution

In order to achieve the above objectives, according to an aspect of the present disclosure, there is provided a digital gallery system,
the digital gallery system including:
a user terminal;
a digital gallery configured with a plurality of local devices; and
a gallery management server configured to store a content group, and perform control such that content included in the content group is output to the digital gallery in response to a request from the user terminal,
wherein the gallery management server includes:
   a database in which the content group including at least one piece of the content is stored;
   an authentication part configured to receive authentication information from the user terminal existing in a preset area within the digital gallery, and authenticate the user terminal with respect to the digital gallery by using the received authentication information; and
   a controller configured to, when the authentication part completes authentication of the user terminal, control the digital gallery such that the content in the content group selected by the user terminal is output to at least one of the local devices in the digital gallery.

Preferably, the authentication part may be configured to
receive location information from the user terminal as the authentication information, and authenticate the user terminal with respect to the digital gallery when the location information of the user terminal is included in the preset area.

Preferably, the authentication part may be configured to
receive code recognition information from the user terminal as the authentication information, and authenticate the user terminal by using the code recognition information.

Preferably, the controller may be configured to
perform control such that the content in the content group selected by the user terminal is output to a particular local device selected by the user terminal among the plurality of local devices in the digital gallery.

Preferably, the database may be configured to
store the content by adding a tag thereto, and classify the content into the content group by using the tag for storage.

Preferably,
a creator terminal configured to create the content and transmit the content to the gallery management server may be further included.

In order to achieve the above objectives, according to an aspect of the present disclosure, there is provided a digital gallery system,
the digital gallery system including:
a user terminal;
a digital gallery configured with a plurality of local devices; and
a gallery management server configured to store a content group, and perform control such that content included in the content group is output to the digital gallery in response to a request from the user terminal,
wherein the gallery management server includes:
   a database in which the content group including at least one piece of the content is stored;
   an authentication part configured to authenticate the user terminal with respect to a particular local device among the local devices in the digital gallery; and
   a controller configured to control the digital gallery such that the content in the content group selected by the user terminal is output to the particular local device for which the user terminal is authenticated by the authentication part.

### Advantageous Effects

According to the digital gallery system proposed in the present disclosure, in the digital gallery configured with the plurality of local devices, the gallery management server performs control such that content in a content group selected by the user is output to a particular local device in response to a request from the user terminal, so that the user can actively select the content group to directly experience and the local device for experience, thereby increasing user autonomy and satisfaction.

Furthermore, various useful advantages and effects of the present disclosure are not limited to the above-described contents, and will be more easily understood in the process of describing specific embodiments of the present disclosure.

### Description of Drawings

FIG. 1 is a diagram illustrating the configuration of a digital gallery system according to an embodiment of the present disclosure.
FIG. 2 is a diagram illustrating the detailed configuration of a gallery management server, in a digital gallery system according to an embodiment of the present disclosure.
FIG. 3 is a diagram illustrating a data structure of a database, in a digital gallery system according to an embodiment of the present disclosure.
FIG. 4 is a diagram illustrating a process in which an authentication part authenticates a user terminal with respect to a digital gallery, in a digital gallery system according to an embodiment of the present disclosure.
FIG. 5 is a diagram illustrating a process in which an authentication part authenticates a user terminal with respect to a local device, in a digital gallery system according to an embodiment of the present disclosure.
FIG. 6 is a diagram illustrating the flow of a method for providing a digital gallery according to an embodiment of the present disclosure.

### <Description of the Reference Numerals in the Drawings>

10: digital gallery system
100: user terminal
200: digital gallery
201: preset area
210: local device
211: reference area
300: gallery management server
310: database
320: authentication part
330: controller
400: creator terminal
S110: storing content group in database
S120: authenticating user terminal with respect to digital gallery
S130: controlling digital gallery such that content in content group selected by user terminal is output to at least one of local devices in digital gallery

### Best Mode

Hereinafter, embodiments of the present disclosure will be described in detail with reference to the accompanying drawings such that the present disclosure can be easily embodied by those skilled in the art to which the present disclosure belongs. However, the present disclosure may be embodied in various different forms and should not be limited to the embodiments set forth herein. Further, in order to clearly explain the present disclosure, portions that are not related to the present disclosure are omitted in the drawings, and like reference numerals designate like elements throughout the specification.

Throughout the specification, when a part is referred to as being "connected" to another part, it includes not only being "directly connected", but also being "indirectly connected" by interposing the other part therebetween. In addition, terms such as "comprising", "including", and "having" described below should be interpreted as specifying the existence of features, numbers, steps, operations, elements, components, or combinations thereof described in the specification, and should be understood as not precluding in advance the possibility that one or more other features, numbers, steps, operations, elements, components, or combination thereof may exist or may be added. In addition, expression in the singular form used in the present disclosure includes expression in the plural form, unless the context clearly indicates otherwise.

In addition, the elements, processes, steps, or methods included in the embodiments of the present disclosure may be shared as long as they do not technically conflict with each other.

Also, the terms "~ part", "~ unit", and "module" mean a unit for processing at least one function or operation and may be implemented by a combination of hardware and/or software.

In addition, part of the operations or functions described as being performed by a terminal, apparatus, or device in the present disclosure may be performed instead by a server connected to the terminal, apparatus, or device. Similarly, part of the operations or functions described as being performed by the server may be performed by the terminal, apparatus, or device connected to the server.

In particular, the means for executing a system according to each embodiment of the present disclosure may be an application or a web server. Examples of a terminal that is the means for reading a recording medium on which the application or the web server is recorded may include general PCs, such as general desktop and laptop computers, and mobile terminals, such as smartphones and tablet PCs.

The embodiments described hereinafter are detailed descriptions of the present disclosure to facilitate understanding of the present disclosure and are not intended to limit the scope of the present disclosure. Thus, subject matter having the same scope and performing the same function as that of the present disclosure also falls within the scope of the present disclosure.

Hereinafter, embodiments of the present disclosure will be described in detail with reference to the accompanying drawings.

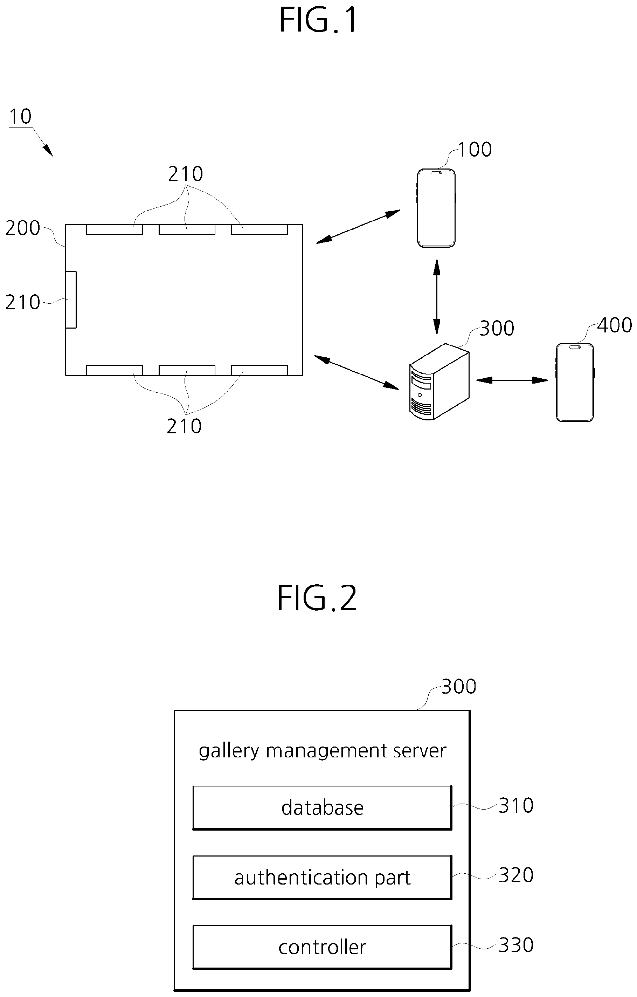

FIG. 1 is a diagram illustrating the configuration of a digital gallery system 10 according to an embodiment of the present disclosure. As shown in FIG. 1, a digital gallery system 10 according to an embodiment of the present disclosure may include a user terminal 100, a digital gallery 200, and a gallery management server 300, and may further include a creator terminal 400.

That is, the present disclosure may be implemented in a manner that the digital gallery 200 is configured with a plurality of local devices 210, and that the user terminal 100, the digital gallery 200, and the gallery management server 300 transmit and receive various signals and data over a network. Herein, the network may be a wired network, such as a local area network (LAN), a wide area network (WAN), or a value-added network (VAN), or any types of wireless networks, such as a mobile radio communication network, a satellite network, Bluetooth, wireless broadband Internet (WiBro), High Speed Downlink Packet Access (HSDPA), long-term evolution (LTE), and 3/4/5/6th-generation mobile telecommunication (3/4/5/6G).

More specifically, in response to a request from the user terminal 100, the gallery management server 300 may perform control such that content in a content group selected by a user is output to at least one of the local devices 210 in the digital gallery 200. In addition, the creator terminal 400 is further included, and the gallery management server 300 may receive content from the creator terminal 400 and store the content, and may classify the content into content groups for management. Through this, the user may manually select a content group to be experienced in the digital gallery 200 and a local device 210 and may experience the content group. Hereinafter, each element of the digital gallery system 10 according to an embodiment of the present disclosure will be described in detail.

The user terminal 100 may be implemented as an electronic device of a user who visits the digital gallery 200 to experience content. The user may visit the digital gallery 200 and operate the user terminal 100 to input a selection signal for selecting a content group, thereby experiencing the selected content group on the local device 210 within the digital gallery 200.

Herein, the content may be in various forms, such as an image, a video, a game, a survey, and multimedia, and a content group may include at least one piece of content. The content may be classified into content groups by a preset criterion, a manager, or a creator.

The digital gallery 200 may be configured with a plurality of local devices 210. Herein, the digital gallery 200 may be a space in which the plurality of local devices 210 is installed as shown in FIG. 1. Any space, such as the digital gallery 200 or a digital museum, in which the plurality of local devices 210 is installed may serve as the digital gallery 200 regardless of a specific name thereof. For example, the digital gallery 200 may be an official museum or gallery in which multiple local devices 210 are installed, but the digital gallery 200 may be implemented by installing the plurality of local devices 210 in spaces for various purposes, such as subway plazas, train waiting rooms, bus waiting rooms, traditional markets, government and public office lobbies, company lobbies, school lobbies, and tourist facilities.

In the meantime, the local devices 210 in the digital gallery 200 may be a device capable of communicating with the gallery management server 300 over the network, and may be devices including a display capable of outputting content. For example, the local devices 210 may be digital signages or display panels.

The gallery management server 300 may store content groups, and may perform control such that content included in a content group is output to a digital gallery 200 in response to a request from the user terminal 100. A detailed configuration of the gallery management server 300 will be described later with reference to FIG. 2.

The creator terminal 400 may create content and transmit the content to the gallery management server 300. That is, the creator terminal 400 may be implemented as an electronic device of a creator that creates and supplies content. The creator may be an individual, an institution, a company, or an organization that creates content.

In the meantime, the user terminal 100 and the creator terminal 400 may be implemented as electronic devices used by a user and a creator, respectively. Examples of the electronic device may include at least one of the following: a smartphone, a tablet personal computer (PC), a mobile phone, a video phone, an e-book reader, a desktop PC, a laptop PC, a netbook computer, a workstation, a server, a personal digital assistant (PDA), a media box, a game console, an electronic dictionary, and a wearable device. Examples of the wearable device may include at least one of the following: an accessory type (e.g., a watch, ring, bracelet, anklet, necklace, glasses, contact lens, or a head-mounted device (HMD)), a fabric or clothing-integrated type (e.g., electronic clothing), a body-attachable type (e.g., a skin pad or tattoo), and an implantable circuit. In various embodiments, the electronic device is not limited to the aforementioned devices, and may be a combination of two or more of the aforementioned various devices.

FIG. 2 is a diagram illustrating the detailed configuration of a gallery management server 300, in a digital gallery system 10 according to an embodiment of the present disclosure. As shown in FIG. 2, the gallery management server 300 of the digital gallery system 10 according to an embodiment of the present disclosure may include a database 310, an authentication part 320, and a controller 330.

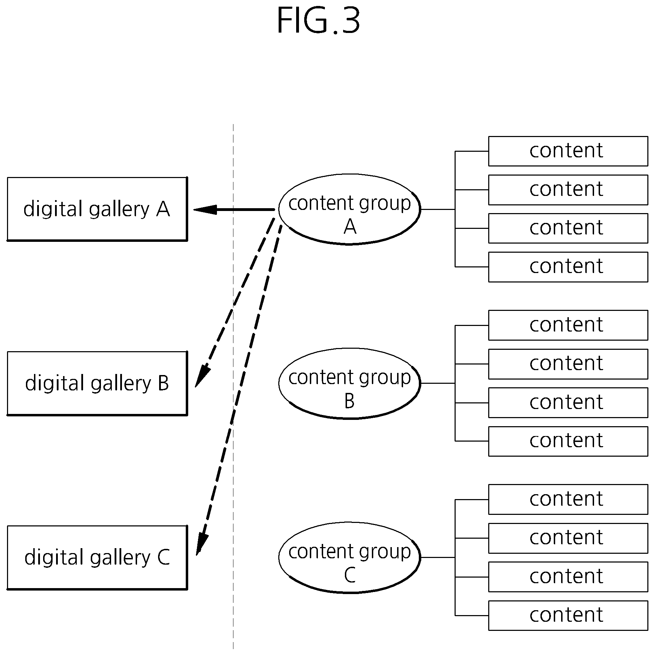

The database 310 may store a content group including at least one piece of content. FIG. 3 is a diagram illustrating a data structure of a database 310, in a digital gallery system 10 according to an embodiment of the present disclosure. As shown in FIG. 3, in the digital gallery system 10 according to an embodiment of the present disclosure, the database 310 may classify multiple pieces of content into content groups to store and manage the content, and the controller 330 may perform control such that each content group is allocated and output to a particular local device 210 of the digital gallery 200.

For example, content group A may be event content of kindergarten A, content group B may be event content of kindergarten B, and content group C may be event content of kindergarten C. In this manner, content groups may be configured for respective kindergartens.

In the meantime, the database 310 may store content by adding tags thereto, and may classify the content into content groups by using the tags for storage. Herein, a tag is set for individual content, and may be set by a manager or a creator. According to an embodiment, the gallery management server 300 may automatically set a tag by analyzing content through an image analysis technology. In addition, one piece of content may be classified into one content group, or may be classified into two or more content groups.

The authentication part 320 may receive authentication information from the user terminal 100 within a preset area 201 in the digital gallery 200, and may authenticate the user terminal 100 with respect to the digital gallery 200 by using the received authentication information. That is, the authentication part 320 may authenticate that a user exists in a particular area (the preset area 201) of the digital gallery 200, and upon completion of the authentication, the authentication part may give the user the authority to allow a content group desired by a customer to be output to a local device 210 in the digital gallery 200. Herein, the authentication part 320 may perform authentication through a preset area 201.

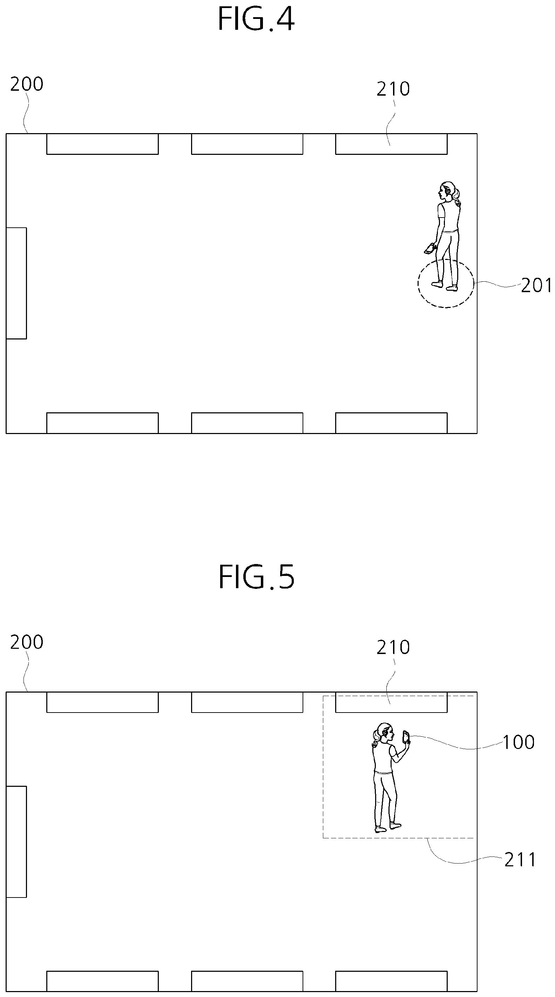

FIG. 4 is a diagram illustrating a process in which an authentication part 320 authenticates a user terminal 100 with respect to a digital gallery 200, in a digital gallery system 10 according to an embodiment of the present disclosure. As shown in FIG. 4, in the digital gallery system 10 according to an embodiment of the present disclosure, a preset area 201 for authentication may be provided within the digital gallery 200. Herein, the preset area 201 is an area into which one or several users enter, and may be displayed in various manners as an area for authentication. When a user enters the preset area 201 carrying the user terminal 100, the authentication part 320 receives authentication information from the user terminal 100. The authentication information may vary, such as location information, code recognition information, or a beacon signal of the user terminal 100, according to an authentication method.

For example, the authentication part 320 may receive the location information from the user terminal 100 as the authentication information, and when the location information of the user terminal 100 is included in the preset area 201, the authentication part may authenticate the user terminal 100 with respect to the digital gallery 200. In addition, the authentication part 320 may receive the code recognition information from the user terminal 100 as the authentication information, and may authenticate the user terminal 100 by using the code recognition information. Herein, the code may be provided in various forms, such as a barcode, a QR code, or a code configured with numbers and text.

The authentication part 320 may confirm that the user exists in the preset area 201, by using the authentication information as described above, and may give the authority to allow a content group to be output to all the local devices 210 in the digital gallery 200.

When the authentication part 320 completes authentication of the user terminal 100, the controller 330 may control the digital gallery 200 such that content in a content group selected by the user terminal 100 is output to at least one of the local devices 210 in the digital gallery 200.

That is, the user may select a content group by using the application run on the user terminal 100, and the controller 330 may receive a selection signal to control the digital gallery 200 such that the content group selected by the user is output to a particular local device 210. When there are many users, a user may have to wait until a selected content group is output to a local device 210 after access to the digital gallery 200 is authenticated in a preset area 201. In addition, an embodiment may be implemented such that a user who is waiting for a local device 210 selected by the user may make a change from the local device to another local device 210 having a shorter waiting line.

The controller 330 may output a plurality of pieces of content in a content group in a preset order, such as an order set by a creator, an order set by a manager, an order set by a user, or a random order. Herein, there may be one particular local device 210 to which a content group is output, or a content group may be output to several local devices 210 within the digital gallery 200.

In addition, the controller 330 may perform control such that content in a content group selected by the user terminal 100 is output to a particular local device 210 selected by the user terminal 100 among the plurality of local devices 210 in the digital gallery 200. That is, the local device 210 to which the content group is output may be manually selected by the user using the user terminal 100. For example, a user may select a local device 210 that the user wants through a selection signal for selecting a particular local device 210 manually by the user from a map of the digital gallery 200 displayed on the user terminal 100 or a list of local devices 210 included in the digital gallery 200. According to an embodiment, the controller 330 may randomly select a local device 210 to which a content group is to be output, or may select the local device according to a device selection priority algorithm.

In the meantime, an application for using the digital gallery 200 may be installed and run on the user terminal 100. Upon entry into the digital gallery 200, the application may perform processes required for the user to use the digital gallery 200, such as transferring the location information of the user terminal 100 to the gallery management server 300, outputting a layout map of local devices 210 within the digital gallery 200 or a list of local devices 210, or providing a menu for selecting a content group.

Herein, when outputting a layout map or a list of local devices 210 within the digital gallery 200, the application may also provide waiting line information for each local device 210. Accordingly, the user may check the waiting line information (the order of users waiting in line, the user's place in line, or an expected waiting time) and then select a local device 210 or change the already selected local device 210. Therefore, even when there are many users and a user has to wait for display of a content group selected by the user, the user may predict a waiting time for reasonable use.

In the meantime, in another embodiment of the present disclosure, the authentication part 320 may authenticate the user terminal 100 with respect to a particular local device 210 among the local device 210 in the digital gallery 200. In addition, the controller may control the digital gallery 200 such that content in the content group selected by the user terminal 100 is output to the particular local device 210 for which the user terminal 100 is authenticated by the authentication part 320. In this embodiment, the authentication part 320 may be an element that authenticates the user terminal 100 with respect to a particular local device 210 rather than the entire digital gallery 200 and allows a content group to be output to the particular local device 210 for which the user terminal is authenticated. Herein, the authentication part 320 may perform authentication through various methods including a method of using a reference area 211 of a local device 210 and the location information of the user terminal 100.

More specifically, the authentication part 320 may receive the location information from the user terminal 100, and when the location information of the user terminal 100 is included in a reference area 211 of a particular local device 210, the authentication part may authenticate the user terminal 100 with respect to the particular local device 210. FIG. 5 is a diagram illustrating a process in which an authentication part 320 authenticates a user terminal 100 with respect to a local device 210, in a digital gallery system 10 according to an embodiment of the present disclosure. As shown in FIG. 5, in the digital gallery system 10 according to an embodiment of the present disclosure, a reference area 211 may be set for each local device 210. Herein, the reference area 211 may be an area including the local device 210, or may be an area not including the local device 210. As shown in FIG. 5, when the user enters a reference area 211 carrying the user terminal 100, the location information of the user terminal 100 may be transferred to the gallery management server 300, and the authentication part 320 may specify a local device 210 having the reference area 211 including the location information of the user terminal 100 and may authenticate that the user terminal 100 has selected the specified local device 210.

According to an embodiment, the authentication part 320 may receive a selection signal for selecting a particular local device 210 from the user terminal 100, and may authenticate the user terminal 100 by using the selection signal. That is, the user terminal 100 may be authenticated for the particular local device 210 through the selection signal for selecting the particular local device 210 manually by the user from a map of the digital gallery 200 displayed on the user terminal 100 or a list of local devices 210 included in the digital gallery 200.

For example, if user a has a child attending kindergarten A and user b has a child attending kindergarten B, when user a and user b visit the digital gallery 200, user a stands in front of a particular local device 210 within the digital gallery 200 to have the user terminal 100 authenticated using the location information and selects content group A through the application to view and experience event content of kindergarten A. In addition, user b runs the application and manually selects another particular local device 210 other than the local device 210 being used by user a and selects content group B to view event content of kindergarten B through the selected particular local device 210. As described above, although user a and user b visit the same digital gallery 200, the users may have different experiences by selecting their respective desired content groups.

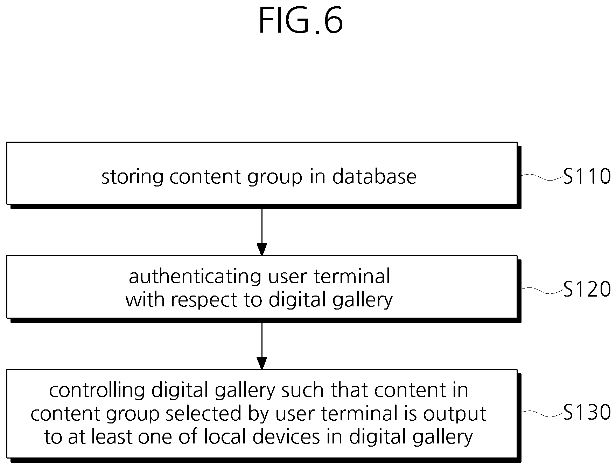

FIG. 6 is a diagram illustrating the flow of a method for providing a digital gallery 200 according to an embodiment of the present disclosure. As shown in FIG. 6, a method for providing a digital gallery 200 according to an embodiment of the present disclosure may include: storing a content group in a database 310 in step S110; authenticating a user terminal 100 with respect to a particular local device 210 in step S120; and controlling the digital gallery 200 such that content in the content group selected by the user terminal 100 is output to the particular local device 210 in step S130.

Details of each of the steps have been sufficiently described in relation to the above-described digital gallery system 10 according to an embodiment of the present disclosure, so a detailed description thereof will be omitted.

As described above, according to the digital gallery system 10 and the method for providing the digital gallery 200 proposed in the present disclosure, in the digital gallery 200 configured with the plurality of local devices 210, the gallery management server 300 performs control such that content in a content group selected by the user is output to a particular local device 210 in response to a request from the user terminal 100, so that the user may actively select the content group to directly experience and the local device 210 for experience, thereby increasing user autonomy and satisfaction.

In the meantime, the present disclosure may include a computer-readable recording medium including program instructions for performing operations implemented by various communication terminals. Examples of the computer-readable recording medium include magnetic recording media such as hard disks, floppy disks and magnetic tapes; optical data storage media such as CD-ROMs or DVD-ROMs; magneto-optical media such as floptical disks; and hardware devices, such as read-only memory (ROM), random-access memory (RAM), and flash memory, which are particularly structured to store and implement the program instruction.

The computer-readable recording medium may include program instructions, data files, and data structures either separately or in combination. Herein, the program instructions recorded in the computer-readable medium may be those particularly designed and configured to implement the present disclosure, or the program instructions may be those known and available to those skilled in the art of computer software. For example, the program instructions may include machine language codes, which are created by a compiler, as well as high-level language codes, which may be executed by a computer by using an interpreter.

The foregoing description of the present disclosure is intended for exemplifications, and it will be understood by those skilled in the art that the present disclosure may be easily modified in other specific forms without changing the technical idea or essential features of the present disclosure. Therefore, it should be understood that the embodiments described above are illustrative in all aspects and not restrictive. For example, each element described as a single type may be implemented in a distributed manner, and likewise elements described as distributed may be implemented in a combined form.

The scope of the present disclosure is characterized by the appended claims rather than the detailed description described above, and it should be construed that all alterations or modifications derived from the meaning and scope of the appended claims and the equivalents thereof fall within the scope of the present disclosure.

## Claims

1. A digital gallery system (10), comprising:
a user terminal (100);
a digital gallery (200) configured with a plurality of local devices (210); and
a gallery management server (300) configured to store a content group, and perform control such that content included in the content group is output to the digital gallery (200) in response to a request from the user terminal (100),
wherein the gallery management server (300) includes:
a database (310) in which the content group including at least one piece of the content is stored;
an authentication part (320) configured to receive authentication information from the user terminal (100) existing in a preset area within the digital gallery (200), and authenticate the user terminal (100) with respect to the digital gallery (200) by using the received authentication information; and
a controller (330) configured to, when the authentication part (320) completes authentication of the user terminal (100), control the digital gallery (200) such that the content in the content group selected by the user terminal (100) is output to at least one of the local devices (210) in the digital gallery (200).

2. The digital gallery system of claim 1, wherein the authentication part (320) is configured to receive location information from the user terminal (100) as the authentication information, and authenticate the user terminal (100) with respect to the digital gallery (200) when the location information of the user terminal (100) is included in the preset area.

3. The digital gallery system of claim 1, wherein the authentication part (320) is configured to receive code recognition information from the user terminal (100) as the authentication information, and authenticate the user terminal (100) by using the code recognition information.

4. The digital gallery system of claim 1, wherein the controller (330) is configured to perform control such that the content in the content group selected by the user terminal (100) is output to a particular local device (210) selected by the user terminal (100) among the plurality of local devices (210) in the digital gallery (200).

5. The digital gallery system of claim 1, wherein the database (310) is configured to store the content by adding a tag thereto, and classify the content into the content group by using the tag for storage.

6. The digital gallery system of claim 1, further comprising:
a creator terminal (400) configured to create the content and transmit the content to the gallery management server (300).

7. A digital gallery system (10), comprising:
a user terminal (100);
a digital gallery (200) configured with a plurality of local devices (210); and
a gallery management server (300) configured to store a content group, and perform control such that content included in the content group is output to the digital gallery (200) in response to a request from the user terminal (100),
wherein the gallery management server (300) includes:
a database (310) in which the content group including at least one piece of the content is stored;
an authentication part (320) configured to authenticate the user terminal (100) with respect to a particular local device (210) among the local devices (210) in the digital gallery (200); and
a controller (330) configured to control the digital gallery (200) such that the content in the content group selected by the user terminal (100) is output to the particular local device (210) for which the user terminal (100) is authenticated by the authentication part (320).
